# EUROPÄISCHE PATENTSCHRIFT

(11) **EP 1 163 457 B1**
(45) Veröffentlichungstag und Bekanntmachung des Hinweises auf die Patenterteilung: **02.05.2003**
(21) Anmeldenummer: 00907617.5
(22) Anmeldetag: 24.02.2000
(51) Int. Cl.: F16C 29/04, F16C 35/073

(54) **WÄLZLAGER FÜR LÄNGSBEWEGUNGEN EINER SCHALTSCHIENE**
ANTI-FRICTION BEARING FOR LONGITUDINAL MOVEMENTS OF A SELECTOR SHAFT
PALIER A ROULEMENT POUR LES MOUVEMENTS LONGITUDINAUX D'UNE TIGE DE COMMANDE DES FOURCHETTES

(30) Priorität: 19.03.1999 DE 19912402
(43) Veröffentlichungstag der Anmeldung: 19.12.2001
(73) Patentinhaber: INA-Schaeffler KG, 91074 Herzogenaurach (DE)
(72) Erfinder: TRISSLER, Arnold, D-91074 Herzogenaurach (DE); KRÄMER, Klaus, D-91460 Baudenbach (DE)
(86) Internationale Anmeldenummer: EP0001515
(87) Internationale Veröffentlichungsnummer: WO00057072

(56) Entgegenhaltungen:
- GB-A- 2 163 495
- US-A- 4 544 212
- US-A- 5 322 374
- US-A- 5 897 214

## Beschreibung

### Gebiet der Erfindung

Die Erfindung betrifft ein Wälzlager für Längsbewegungen mit begrenztem Schiebeweg zur Führung einer Schaltschiene mit rechteckigem Querschnitt, welches aus einem die Schaltschiene umgebenden und an dieser befestigbaren Innenteil, einer das Innenteil umgebenden Außenhülse und als Kugeln ausgebildeten Wälzkörpern besteht, die in einem zwischen dem Innenteil und der Außenhülse angeordneten Käfig geführt sind und parallel zur Längsrichtung der Schaltschiene an dem Innenteil und der Bohrungswandung der Außenhülse abrollen.

### Hintergrund der Erfindung

Schaltschienen mit rechteckigem Querschnitt können als gestanzte Bauteile in Zahnradgetrieben, beispielsweise Kraftfahrzeuggetrieben verwendet werden. Aus der Patentschrift DE 34 02 523 C2 ist ein Wälzlager für eine Schaltschiene der eingangs genannten Art bekannt. Dort ist das Innenteil ein kompliziert geformtes Blechbauteil und wird von einem weiteren, als Käfig für die Kugeln dienenden, im Querschnitt U-förmigen Blechbauteil umgeben.

### Zusammenfassung der Erfindung

Der Erfindung liegt die Aufgabe zugrunde, ein einfach und kompakt aufgebautes Wälzlager zu schaffen, welches sich leicht montieren läßt und eine Lagerung der Schaltschiene mit hoher statischer Tragzahl ermöglicht. Dieses soll als steife Lagerstelle Kräfte aus verschiedenen Richtungen aufnehmen können, so daß die Übertragung von Biegemomenten auf Anschlußteile verringert ist.

Diese Aufgabe wird erfindungsgemäß dadurch gelöst, daß das Innenteil aus einer kreisringförmigen Laufbahnhülse und einem darin angeordneten, eine Freistellung für die Aufnahme der Schaltschiene aufweisenden Kunststoffteil besteht, an welchem eine in Längsrichtung der Schaltschiene verlaufende federnde Zunge ausgebildet ist, die mit einem an ihrem freien Ende angeformten Wulst in eine Quernut der Schaltschiene einrastbar ist. Auf diese Weise braucht bei der Montage des Wälzlagers das Kunststoffteil nur auf die Schaltschiene aufgeschoben zu werden. Wenn der Wulst der federnden Zunge in die Quernut der Schaltschiene eingeraste ist, wird die Laufbahnhülse lagerichtig über das Kunststoffteil geschoben.

Zur lagerichtigen Anordnung können die Laufbahnhülse und die Außenhülse jeweils einen Boden aufweisen, in welchem eine dem Querschnitt der Schaltschiene entsprechende rechteckige Auslochung eingearbeitet ist. Durch die rechteckige Auslochung des Bodens der Laufbahnhülse wird sichergestellt, daß sich die Laufbahnhülse gegenüber der Freistellung im Kunststoffteil nicht verdrehen kann.

Die Laufbahnhülse kann an ihrer von dem Boden abgewandten Stirnseite einen das Kunststoffteil in der Laufbahnhülse axial befestigenden Bördelrand aufweisen. Nachdem die Laufbahnhülse auf das Kunststoffteil aufgeschoben worden ist, kann dort dann das Einbördeln des Kunststoffteils erfolgen. Die Laufbahnhülse rückt nun die federnde Zunge zur Schaltschiene hin und hält den Wulst der Zunge in der Quernut der Schaltschiene, so daß die Befestigung des Kunststoffteils an der Schiene durchgeführt ist. Danach kann der Käfig auf die Laufbahnhülse aufgeschoben werden.

Die Laufbahnhülse kann einen Längsschlitz aufweisen, in welchem ein Anschlagzapfen des Käfigs verschiebbar angeordnet ist. Dadurch sind die beiden Endstellungen für den Käfig bei dessen Verschiebung in Längsrichtung der Schaltschiene infolge des Abwälzens der Kugeln an der Laufbahnhülse festgelegt.

### Kurze Beschreibung der Zeichnung

Ein Ausführungsbeispiel der Erfindung ist in der Zeichnung dargestellt und wird im folgenden näher beschrieben. Es zeigen:

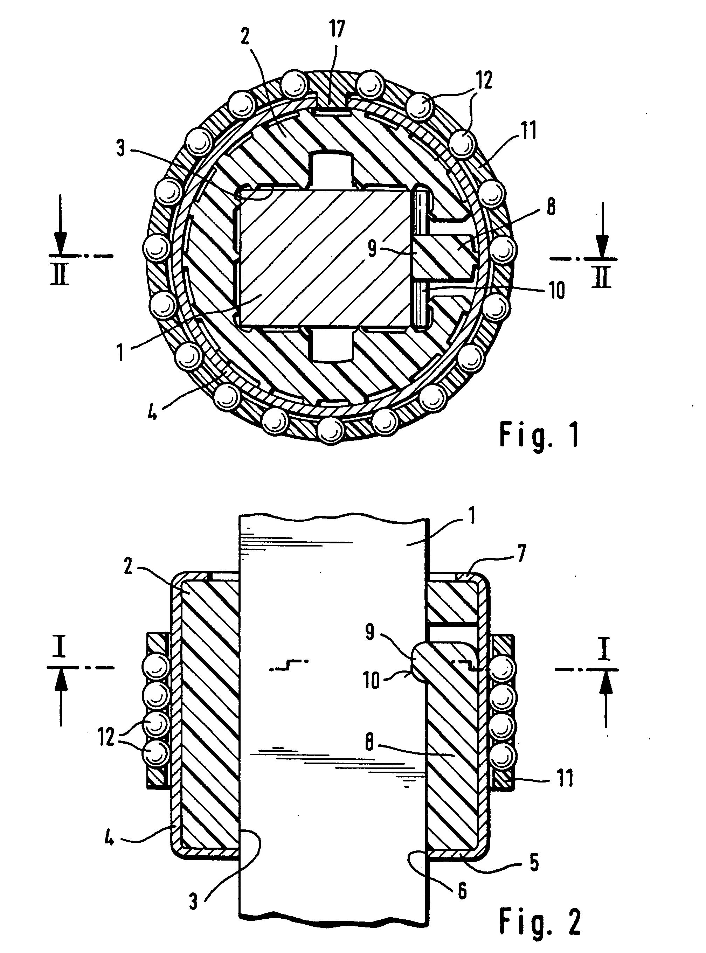

- Figur 1: ein erfindungsgemäßes Wälzlager für eine rechteckige Schaltschiene im Querschnitt;
- Figur 2: einen Längsschnitt durch das Lager gemäß Linie II-II der Figur 1;

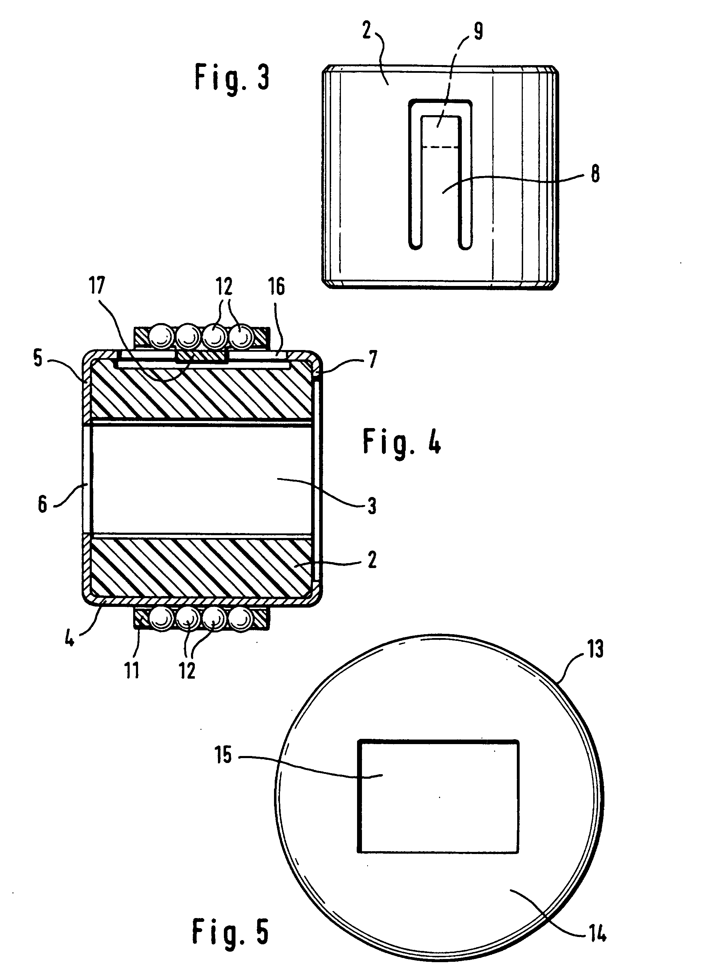

- Figur 3: eine Seitenansicht des Kunststoffteils des Lagers;
- Figur 4: einen Längsschnitt durch das von der Laufbahnhülse und dem Käfig umgebene Kunststoffteil des Lagers;
- Figur 5: die Außenhülse des Lagers in einer den Boden darstellenden stirnseitigen Ansicht.

### Ausführliche Beschreibung der Zeichnung

Ein erfindungsgemäßes Wälzlager für eine Schaltschiene 1, die einen rechtekkigen Querschnitt aufweist, enthält ein die Schaltschiene 1 umgebendes Kunststoffteil 2, welches im Inneren eine dem Querschnitt der Schaltschiene 1 entsprechende Freistellung 3 aufweist. Das Kunststoffteil 2 befindet sich in einer topfförmigen Laufbahnhülse 4 und stützt sich dort axial an einem Boden 5 der Laufbahnhülse 4 ab. Dieser weist eine rechteckige Auslochung 6 auf, die dem Querschnitt der Schaltschiene entspricht, so daß die Laufbahnhülse 4 mit dem Kunststoffteil 2 im montierten Zustand die Schaltschiene 1 umgibt. An ihrer von dem Boden 5 abgewandten Stirnseite ist die Laufbahnhülse 4 mit einem Bördelrand 7 versehen, der während der Montage gebildet wird, wenn das Kunststoffteil 2 und die Laufbahnhülse 4 auf die Schaltschiene 1 gesteckt sind. Der Bördelrand 7 hält das Kunststoffteil 2 in axialer Richtung in der Laufbahnhülse 4 fest.

Für die Befestigung des Kunststoffteiles 2 an der Schaltschiene 1 ist an dem Kunststoffteil 2 eine in Längsrichtung der Schaltschiene 1 sich erstreckende federnde Zunge 8 ausgebildet. Diese weist an ihrem freien Ende einen zur Freistellung 3 des Kunststoffteils 2 hin weisenden Wulst 9 auf, der bei Aufschieben des Kunststoffteils 2 auf die Laufbahnhülse 4 in eine Quernut 10 der Laufbahnhülse 4 einrastet. Wenn danach die Laufbahnhülse 4 auf das Kunststoffteil 2 gesteckt ist, kann die federnde Zunge 8 sich nicht mehr radial zurückbewegen, weil sie von der Laufbahnhülse 4 festgehalten wird. Auf diese Weise ist das Kunststoffteil 2 mit der Laufbahnhülse 4 an der Schaltschiene 1 befestigt.

Die Mantelfläche der Laufbahnbüchse 4 ist von einem Käfig 11 und Kugeln 12 umgeben, die von dem Käfig 11 geführt sind. Mit diesem Käfig 11 und den Kugeln 12 ist die Laufbahnhülse 4 mit dem Kunststoffteil 2 und der Schaltschiene 1 längsverschieblich in einer Außenhülse 13 gelagert, in welche die Wälzlagerteile bei der Montage anschließend eingesteckt sind. Die Außenhülse 13 ist ebenso, wie die Laufbahnhülse 4 topfförmig ausgebildet und weist an einer Stirnseite einen Boden 14 mit einer Auslochung 15 auf. Auch diese Auslochung 15 entspricht dem Querschnitt der Schaltschiene 1, so daß im montierten Zustand die Außenhülse 13, die Laufbahnhülse 4 und das Kunststoffteil 2 gegenüber der Schaltschiene 1 nicht verdrehbar und somit lagerichtig angeordnet sind.

Der Schiebeweg der Schaltschiene 1 wird innerhalb eines Längsschlitzes 16 der Laufbahnhülse 4 begrenzt. Ein Anschlagzapfen 17 des Käfigs 11 ragt in den Längsschlitz 16 hinein und ist hier mit dem Käfig 11 längsverschieblich angeordnet. Die beiden Schlitzenden bilden Anschläge für den Anschlagzapfen 17. Von dessen Bewegungsmöglichkeit innerhalb des Längsschlitzes 16 hängt die Bewegung des Käfigs 12 in Längsrichtung und damit die Längsbewegung der Schaltschiene 1 ab. Durch diese Anordnung wird gleichzeitig eine Verdrehung des Käfigs 11 in Umfangsrichtung der Laufbahnhülse 4 verhindert.

### Bezugszahlen

- 1: Schaltschiene
- 2: Kunststoffteil
- 3: Freistellung
- 4: Laufbahnhülse
- 5: Boden
- 6: Auslochung
- 7: Bördelrand
- 8: federnde Zunge
- 9: Wulst
- 10: Quernut
- 11: Käfig
- 12: Kugel
- 13: Außenhülse
- 14: Boden
- 15: Auslochung
- 16: Längsschlitz
- 17: Anschlagzapfen

## Patentansprüche

1. Wälzlager für Längsbewegungen mit begrenztem Schiebeweg zur Führung einer Schaltschiene (1) mit rechteckigem Querschnitt, welches aus einem die Schaltschiene (1) umgebenden und an dieser befestigbaren Innenteil, einer das Innenteil umgebenden Außenhülse (13) und als Kugeln (12) ausgebildeten Wälzkörpern besteht, die in einem zwischen dem Innenteil und der Außenhülse (13) angeordneten Käfig (11) geführt sind und parallel zur Längsrichtung der Schaltschiene (1) an dem Innenteil und der Bohrungswandung der Außenhülse (13) abrollen, **dadurch gekennzeichnet, daß** das Innenteil aus einer kreisringförmigen Laufbahnhülse (4) und einem darin angeordneten, eine Freistellung (3) für die Aufnahme der Schaltschiene (1) aufweisenden Kunststoffteil (2) besteht, an welchem eine in Längsrichtung der Schaltschiene (1) verlaufende federnde Zunge (8) ausgebildet ist, die mit einem an ihrem freien Ende angeformten Wulst (9) in eine Quernut (10) der Schaltschiene (1) einrastbar ist.

2. Wälzlager nach Anspruch 1, **dadurch gekennzeichnet, daß** die Laufbahnhülse (4) und die Außenhülse (13) jeweils an einer Stirnseite einen Boden (5, 14) aufweisen, in welchem eine dem Querschnitt der Schaltschiene (1) entsprechende rechteckige Auslochung (6, 15) eingearbeitet ist.

3. Wälzlager nach Anspruch 2, **dadurch gekennzeichnet, daß** die Laufbahnhülse (4) an ihrer von dem Boden (5) abgewandten Stirnseite einen das Kunststoffteil (2) in der Laufbahnhülse (1) axial befestigenden Bördelrand (7) aufweist.

4. Wälzlager nach Anspruch 1, **dadurch gekennzeichnet, daß** die Laufbahnhülse (4) einen Längsschlitz (16) aufweist, in welchem ein Anschlagzapfen (17) des Käfigs (11) verschiebbar angeordnet ist.

## Claims

1. Rolling bearing for longitudinal movements with a limited sliding path for guiding a gearshift rail (1) having a rectangular cross-section, which rolling bearing consists of an inner part that surrounds the gearshift rail (1) and can be fixed thereon, an outer sleeve (13) that surrounds the inner part, and rolling elements configured as balls (12) that are guided in a cage (11) arranged between the inner part and the outer sleeve (13) and roll in a direction parallel to the longitudinal direction of the gearshift rail (1) on the inner part and on the bore wall of the outer sleeve (13), **characterised in that** the inner part consists of a circular ring-shaped raceway sleeve (4) and a plastic part (2) arranged therein and comprising a clearance (3) for receiving the gearshift rail (1), a resilient tongue (8) extending in the longitudinal direction of the gearshift rail (1) is configured on the plastic part (2) and can snap with a bead (9) formed on its free end into a cross-groove (10) of the gearshift rail (1).

2. Rolling bearing according to claim 1, **characterised in that** the raceway sleeve (4) and the outer sleeve (13) each comprises a bottom (5, 14) on a front end, in which bottom (5, 14) a rectangular hole (6, 15) corresponding to the cross-section of the gearshift rail (1) is made.

3. Rolling bearing according to claim 2, **characterised in that** the raceway sleeve (4) comprises on its end turned away from the bottom (5), a bent-over edge (7) that fixes the plastic part (2) axially in the raceway sleeve (4).

4. Rolling bearing according to claim 1, **characterised in that** the raceway sleeve (4) comprises a longitudinal slot (16) in which a stop peg (17) of the cage (11) is arranged for displacement.

## Revendications

1. Roulement pour des mouvements longitudinaux à voie de glissement limitée pour guider un rail (1) de changement de vitesse ayant une section droite rectangulaire, ledit roulement comprenant une partie intérieure qui entoure le rail (1) de changement de vitesse et qui peut être fixée là-dessus, un manchon extérieur (13) qui entoure la partie intérieure, et des corps roulants configurés sous la forme de billes (12) qui sont guidées dans une cage (11) agencée entre la partie intérieure et le manchon extérieur (13) et qui roulent sur la partie intérieure et sur la paroi d'alésage du manchon extérieur (13) en direction parallèle à la direction longitudinale du rail (1) de changement de vitesse, **caractérisé en ce que** la partie intérieure est constituée d'un manchon (4) à piste de roulement en forme d'anneau circulaire et d'une partie (2) en matière plastique qui comprend un dégagement (3) pour recevoir le rail (1) de changement de vitesse, sur la partie (2) en matière plastique est configurée une languette élastique (8) qui s'étend dans la direction longitudinale du rail (1) de changement de vitesse et qui peut s'encliqueter à la faveur d'un bourrelet (9) formé sur son extrémité libre dans une rainure transversale (10) du rail (1) de changement de vitesse.

2. Roulement selon la revendication 1, **caractérisé en ce que** le manchon (4) à piste de roulement et le manchon extérieur (13) comprennent, chacun, sur un côté frontal, un fond (5, 14) dans lequel est travaillé un trou rectangulaire (6, 15) correspondant à la section droite du rail (1) de changement de vitesse.

3. Roulement selon la revendication 2, **caractérisé en ce que** le manchon (4) à piste de roulement comprend sur son côté frontal détourné du fond (5), un collet rabattu (7) qui fixe la partie (2) en matière élastique axialement dans le manchon (4) à piste de roulement.

4. Roulement selon la revendication 1, **caractérisé en ce que** le manchon (4) à piste de roulement comprend une fente longitudinale (16) dans laquelle est agencé de manière déplaçable un tenon d'arrêt (17) de la cage (11).
